(19) Europäisches Patentamt
European Patent Office
Office européen des brevets

(11) Publication number: 0 101 535 B1

(12) EUROPEAN PATENT SPECIFICATION

(45) Date of publication of patent specification: 23.07.86

(51) Int. Cl.$^4$: C 08 F 210/02, C 08 F 230/08

(21) Application number: 83105320.2

(22) Date of filing: 30.05.83

# (54) Ethylene-silane telomer-copolymers.

(30) Priority: 06.07.82 US 395213

(43) Date of publication of application: 29.02.84 Bulletin 84/09

(45) Publication of the grant of the patent: 23.07.86 Bulletin 86/30

(84) Designated Contracting States: DE FR GB IT

(56) References cited:
US-A-3 828 015
US-A-3 884 891

(73) Proprietor: ALLIED CORPORATION
Columbia Road and Park Avenue P.O. Box 2245R (Law Dept.)
Morristown New Jersey 07960 (US)

(72) Inventor: Samoilov, Sergey Michael
501 Lindsley Drive
Morristown New Jersey 07960 (US)
Inventor: Seven, Manfred Karl
55 Mountain Avenue
Long Valley New Jersey 07853 (US)

(74) Representative: Baillie, Iain Cameron et al
c/o Langner Parry Isartorplatz 5
D-8000 München 2 (DE)

EP 0 101 535 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

This invention relates to telomer-copolymers of ethylene and silane comonomers, and a process for producing telomer-comonomers of ethylene and silane comonomers.

Copolymers of ethylene and certain silane monomers have been disclosed. The copolymers are usually produced at elevated temperatures and pressures in the presence of free radical initiators. The resulting products are solid, high molecular weight linear copolymers.

U.S. Patent 3,225,018 discloses crosslinkable copolymers of ethylene and vinyltrialkoxysilanes. The copolymers disclosed have melt indices of from 0 to about 3,000 or more decigrams per minute, as determined according to ASTM D-1238-57T. The process to make the disclosed copolymers is to feed the reactants to a reactor where the reaction is carried out at temperatures ranging from 25°C to 350°C and at pressures of from 10,000 p.s.i.g. to 100,000 p.s.i.g. (68.9 MPa to 689 MPa).

The process is preferably performed at higher temperatures and it is indicated that where higher temperatures are employed, it is preferred to carry out the copolymerization continuously in a tubular reactor, employing residence times from 0.1 minute to 3 minutes. The copolymerization takes place in the presence of free radical initiators.

Ethylene and vinyltriethoxysilane copolymers and the process of making them have been disclosed in U.S. Patent 3,392,156. The copolymers disclosed contain ethylene and a small amount of vinyltriethoxysilane, ranging in amount from 0.10 to 12.5% by weight, and preferably 0.25 to 1.5% by weight based on the weight of ethylene. The polymerization takes place in the presence of an initiator at pressures ranging from 15,000 to 45,000 pounds per square inch (10.34 to 310 MPa) and at temperatures within the range of about 93°C to about 260°C. The copolymers produced have melt indices of from about 0.3 to about 14 g/10 minutes. This indicates that a high molecular weight copolymer was produced.

U.S. Patent 3,828,015 discloses branched copolymers of ethylene with vinyl organosilicone monomers having the general formula

$$CH_2{=}CHSiR^1_n[OSi(R^2)_3]_{3-n}$$

wherein $R^1$ is $CH_3$, $R^2$ is $CH_3$, $C_2H_5$ or phenol, n is 0 or 1. The copolymerization is disclosed as being carried out at from 50 to 280°C under a pressure of from 100 to 3,500 atmospheres (10.1 to 353.5 MPa) in the presence of free radical initiators. The copolymers contain from 0.05 to 60 mol percent of the organosilicone monomer. Low molecular weight organosilicone copolymers are disclosed which contain 3 or 4 silicon atoms per silicone monomer.

U.S. Patent 3,884,891 discloses branched copolymers of ethylene and silicone monomers having the general formula

$$R^1CH{=}CHSiR^2_mR^3_n(OR^4)_p$$

wherein $R^1$ is H or an aliphatic radical having the number of carbon atoms from 1 to 3; $R^2$ is a saturated aliphatic radical with from 1 to 4 carbon atoms; $R^3$ is phenyl; $R^4$ is a saturated aliphatic radical having from 1 to 10 carbon atoms or an aryl having no more than two aromatic rings; m is from 0 to 2, when $R^1$ equals H, and from 1 to 3, when $R^1$ is a saturated aliphatic radical; n is from 0 to 3; p is from 0 to 2; and $m+n+p=3$. The copolymers are prepared by the copolymerization of ethylene with the unsaturated silicone monomer at pressures of from 150 to 3500 atmospheres (10.1 to 353.5 MPa) and temperatures of from 40°C to 300°C in the presence of free radical initiators. The copolymerization reaction is continued for 5 to 1,000 minutes. The copolymer can contain up to 40 molar percent of the silane monomer.

It is disclosed by Samoilov, Ethylene Radical Copolymerization with Vinyl Silanes, Journal of Applied Polymer Science, Applied Polymer Symposium, *36*, 41—48 (1981) that copolymers of ethylene and vinyl silanes containing the linkage of Si—O—C side-bonds crosslinked even at room temperature.

Summary of the invention

The present invention are telomer-copolymers of ethylene and silane monomers which have the formula:

$$CH_2{=}\underset{\displaystyle R^1}{\underset{|}{C}}{-}\!\![\underset{\displaystyle O}{\underset{||}{C}}{-}O{-}(CH_2)_m]_x{-}Si[O[(CH_2)_nO]_yR^2]_vR^3_{3-v}$$

wherein: x is 0 or 1; y is 0 or 1; $R^1$ is H or an aliphatic radical having from 1 to 5 carbon atoms, $R^2$ is a saturated aliphatic radical having from 1 to 10 carbon atoms or an aryl radical having no more than two aromatic rings; m is from 1 to 5; n is from 1 to 5; v is from 1 to 3; $R^3$ is H or an aliphatic radical having from 1 to 4 carbon atoms. $R^1$ is H when $x=0$.

The copolymers have a number average molecular weight of from 500 to 10,000 and from 0.1 to 70% by weight of the silane comonomer moiety. Each copolymer is capped by a telomer chain transfer agent.

Preferably, the copolymers have a number average molecular weight of from 500 to 5,000 and from 0.2 to 50% by weight of the vinyl silane moiety. The preferred silane comonomer is selected from the group of vinyltrimethoxysilane, vinyltriethoxysilane, vinyl - tris(2 - methoxyethoxy)silane, gamma - methacryloxypropyltrimethoxysilane, and gamma - methacryloxypropyltris(2 - methoxyethoxy)silane.

The present invention includes a process to produce the above-described telomer-copolymers of ethylene and silane comonomers. The ethylene and silane are copolymerized at a reaction pressure in the range of 100 to 700 atmospheres, (10.1 to 70.7 MPa) preferably 300 to 500 atmospheres (30.3 to 50.5 MPa). The reaction temperature is from 100 to 300°C, preferably 100 to 280°C, and most preferably from 130 to 220°C. The reaction is carried out in the presence of a free radical initiator and a telomer chain transfer agent.

The process of the present invention can proceed until from 30 to 90 mol percent, especially from 30 to 80 mol percent and preferably from 50 to 70 mol percent of each of the comonomers is copolymerized. The residence time can be from 20 to 400 minutes, and is preferably from 40 to 150 minutes. The copolymer of the present invention does not crosslink during the process to produce it. Additionally, it does not crosslink by itself.

Description of the preferred embodiments

The telomer-copolymers of ethylene and silane comonomers of the present invention have the formula:

$$CH_2{=}\underset{\displaystyle R^1}{\underset{|}{C}}\!-\!\!\left[\underset{\displaystyle O}{\underset{\|}{C}}\!-\!O\!-\!(CH_2)_m\right]_x\!-\!Si[O[(CH_2)_nO]_yR^2]_vR^3_{3-v}$$

wherein: x is 0 or 1; y is 0 or 1; $R^1$ is H or an aliphatic radical having from 1 to 5 carbon atoms; $R^2$ is a saturated aliphatic radical having from 1 to 10 carbon atoms or an aryl radical having no more than two aromatic rings; m is from 1 to 5; n is from 1 to 5; v is from 1 to 3; $R^3$ is H or an aliphatic radical having from 1 to 4 carbon atoms. $R^1$ is H when x=0.

The copolymers have a number average molecular weight of from 500 to 10,000, preferably from 500 to 5,000, and more preferably from 500 to 3,500. The number average molecular weight is measured by vapor pressure osmometry or gel permeation chromatography. The copolymer of the present invention contains from 0.1 to 70%, preferably from 0.2 to 50% and more preferably from 0.2 to 30% by weight of the silane comonomer moiety.

$R^1$ is hydrogen or an alkyl radical having from 1 to 5 carbon atoms, such as methyl, ethyl, isopropyl, butyl, tert-butyl and pentyl.

$R^2$ is an alkyl radical having from 1 to 10 carbon atoms, such as methyl, ethyl, propyl, butyl, tert-butyl, pentyl, hexyl, heptyl, octyl, and decyl, or an aryl such as benzyl or naphthyl.

$R^3$ is hydrogen or an alkyl radical having from 1 to 4 carbon atoms such as methyl, ethyl, propyl and butyl.

Examples of the vinyltrialkoxysilanes which can be copolymerized with ethylene to form copolymers of the present invention include vinyltrimethoxysilane, vinyltriethoxysilane, vinyltripropoxysilane, vinyltriisopropoxysilane, vinyltributoxysilane, vinyltripentoxysilane, vinyl - tris(2 - methoxyethoxy)silane and, vinyl - tris(2 - ethoxyethoxy)silane.

Acryloxyalkyltrialkoxysilanes which can be copolymerized with ethylene to form copolymers of the present invention include gamma - methacryloxypropyltrimethoxysilane, gamma - acryloxypropyltrimethoxysilane, gamma - methacryloxyethyltrimethoxysilane, gamma - methacryloxypropyl - tris(2 - methoxyethoxy)silane, and gamma - methacryloxypropyltris(2 - ethoxyethoxy)-silane.

The copolymers of ethylene and silane comonomers as described above are capped by a telogen to form the telomers. The telogens are chain transfer agents which are a co-reactant material because they react and are consumed by combining in the polymerized material to form a telomerized polymer product. This product is a low molecular weight copolymer.

Telogens useful in the present invention include compounds containing carbon, hydrogen, oxygen, and chlorine and are generally saturated compounds in that such compounds are free of olefinic unsaturation. Examples of useful telogens include alcohols, aldehydes, ketones, chloroform and carbon tetra-chloride. The preferred telogens contain the structure C—O—H and C—Cl groups. Compounds which contain at least one CH or $CH_2$ group are generally more reactive than analogous compounds containing carbon combined with hydrogen in the form of only $CH_3$ groups. Compounds, especially preferred, have 2—6 aliphatic carbon atoms, not more than two oxygens, or three chlorine atoms and at least one CH or $CH_2$ group. Suitable compounds include alcohols e.g. methanol; ethanol; normal and isopropanol; primary, secondary and tertiary butanols; cyclohexanol; diacetone alcohol; also ethers, e.g. dimethyl, diethyl and diisopropyl ethers; also ketones e.g. acetone; methyl ethyl ketone; isobutyl ketones; cyclohexanone; also esters, e.g. methyl, ethyl, propyl and butyl formates, acetates, propionates butyrates, malonates, orthoformates; acids such as acetic, propionic and butyric acids; and the corresponding acid anhydrides and the corresponding aldehydes; also ethylene oxide; dioxolane; dioxane, methyl, ethyl, propyl, and butyl acetals, lactones; furanes; glycol diacetate; also toluene, ethylbenzene, cumene,

n-propylbenzene, butylbenzenes; amyl benzenes; also chloroform and carbon tetrachloride. An especially preferred telogen is isopropanol. The amount of telogen as well as the particular agent employed and general reaction conditions are factors influencing the product and the production of homogeneous materials. Hence, it is also generally desirable to maintain a substantially constant concentration of telogen within the reaction zone once equilibrium has been established, preferably varying by no more than ±20%, more preferably by no more than ±10%. The actual amount of the telogen agent may vary widely from between about 2% to 60%, usually about 2% to 40% based on the total weight of the feed to or total charge in the reaction zone, more usually between about 15 to 30% depending on the comonomer, the reaction conditions and nature of the product desired.

The present invention includes a process to produce the above-described telomer-copolymers of ethylene and silane comonomer. The copolymerization is carried out at a temperature range of from 100 to 300°C, preferably 100 to 280°C and more preferably from 130 to 220°C. The reaction is carried out at a pressure of from 100 to 700 atmospheres (10.1 to 70.7 MPa) and preferably from 300 to 500 atmospheres (30.3 to 50.5 MPa).

The process of the present invention proceeds until from 30 to 90%, especially from 30 to 80%, and preferably from 50 to 70% of each of the monomers is copolymerized. The average resident time of the reactants in the reactor is from 1 to 400, preferably 20 to 400 minutes, more preferably from 40 to 150 minutes and yet more preferably from 40 to 100 minutes.

The process of the present invention requires a telogen of the type described above. The telogen preferably is maintained in the vapor phase during the process of the invention and hence the lower boiling materials are preferred. It is therefore generally desirable that the telogens have a boiling point below 200°C at atmospheric pressure, preferably below 150°C. Pressure is a factor having a major influence on the amount of telogen to be employed. Generally, larger amounts of telogen and lower pressures tend to produce the lower molecular weight products. There is from 0.1 to 50 and preferably 0.3 to 20 times as much telogen by weight as the silane comonomer. Excessive amounts of the telogens tend to dissolve the product in the gas phase and upset the desired equilibrium of the reaction. On the other hand, the smaller amounts of telogen and the higher pressures tend to produce the higher molecular weight products, and to further such imbalance beyond permissible limits will result in products which can not be effectively recovered and which further may undesirably become crosslinked.

The process of the invention employs an initiator of a free radical type. Such materials represent well-known classes of catalytic compounds useful in polymerization reactions and other chemical reactions generally. Among suitable initiators are peroxy, perhalo and azo compounds, which are moderately stable at 100°C or above. Specific examples include hydrogen peroxide, acetyl peroxide, diethyl peroxide, lauroyl peroxide, benzoyl peroxide, cumene hydroperoxide, tertiary butyl hydroperoxide, di-tertiary butyl peroxide, molecular oxygen, acetone oxime, t-butylperacetate, t-butylperoctoate, 1 - cyano - 1(t - butyl - azo)cyclohexane, 2 - (t - butylazo) - isobutyronitrile, 2 - t - butylazo - 2 - phenylpropane and 2 - t - butylazo - 2 - cyanobutane. Suitable catalyst proportions are from 0.09 to 20%, and preferably 0.1 to 10% by weight of the weight of the telogen or co-reactant which are injected into the reactor. More preferably there is from 0.5 to 5% by weight of the catalyst based on the weight of the telogen. The particular initiator employed must decompose non-explosively at the reaction temperatures and concentrations.

The process of the present invention is desirably carried out in the enlarged pressure-resistant reactor equipped with suitable inlets for the various feed streams and single outlet for the off-gas and withdrawal of product in liquid molten condition. A suitable reactor is preferably of greater height than width and includes an agitator and baffles or other suitable means for thoroughly dispersing the reactants and preferably vertically disposed cooling tubes adapted to take up the exothermic heat of reaction and maintain constant temperature conditions. The ethylene may be introduced at one or more locations as through a line at the top of the reactor. The telogen and free radical initiators may be combined and introduced at an upper portion of the reactor. The comonomer to be polymerized with the ethylene may be fed from a separate source and/or combined with the feed stream containing telogen and initiator for purposes of introduction into the reactor.

Start-up of the process can be important for optimum efficiency and desirably begins with introduction of ethylene into the reactor in an amount sufficient to establish a pressure in the vicinity of the desired operating pressure. At the time of ethylene introduction the reactor is preferably preheated to about reaction temperature. The initial introduction of ethylene may be immediately preceded or followed by introduction of telogen and/or co-reactant in approximately the predetermined operating ratio of ethylene to co-reactant. After the desired ethylene pressure has been established, a continuous feed of free radical initiator and telogen is begun and a suitable off-gas withdrawal rate, approximating that to be employed during the process, is established by permitting gas to vent through the product withdrawal and off-gas line and then through or let down by a metering valve in said line. After initiator introduction there is a period of induction before ethylene polymerization commences which is evidenced by an increase in temperature of the components in the reactor or other observable factors such as an increase in cooling water consumption rate necessary to maintain constant temperature. Following the commencement of the ethylene polymerization, desirably after the first certain indications thereof, the feed of comonomer is commenced at a continuous rate equivalent to that desired during operation. After addition of the comonomer the polymerization continues and proceeds towards equilibrium which generally requires an

additional time period between about 0.5 to 5 hours, depending largely upon the reactivity of the comonomer. Sampling of the product during the period prior to equilibrium is recommended to determine more accurately the time when equilibrium is reached. During this period the product discharged is likely to contain non-homogeneous material, especially during the earlier polymerization stages prior to equilibrium. At equilibrium there is generally no need to continue external heating of the reactor as the polymerization reaction is exothermic and thermally self-sustaining under the conditions of operating of the invention with constant temperature maintained by means of the internal cooling system.

Recovery of liquid molten homogeneous co-polymer product descending to the bottom of the reactor is effected as long as operating conditions remain substantially under control. Generally, equilibrium and conditions necessary to produce a homogeneous product may be maintained for extended time periods before factors disruptive of equilibrium cause shut down and clean up of the reaction equipment and restart of the operation. The product descending to the lower portion of the reactor is desirably discharged therefrom more or less continuously or essentially at the rate at which molten product is formed within the reactor. In carrying out the invention it is also desirable to maintain a minimum amount of molten polymer product within the reactor to avoid excessive contact of the vaporous reactor contents with the polymer product. Generally, substantial amounts of off-gas are withdrawn dissolved in the molten product and the product in the reactor may be effectively minimized by withdrawing a slight excess of gas over the amount dissolved such that the discharging material in a sense is blown through the discharge. For this purpose, the reactor bottom is preferably conical with the apex downwardly disposed and leading into the product and off-gas discharge line. The molten product and off-gases discharged from the reactor are passed through the metering or let down valve and the normally gaseous components are vented off for recovery and/or recycle by collecting the crude molten product in a suitable recovery vessel equipped with a venting outlet to permit removal of gases and vapors released from the crude product. Such vapors may be treated by suitable procedures such as absorption and/or scrubbing to remove and optionally recover telogen agent or other condensable materials discharged from the reactor. If desired, the liquid polymer from the recovery vessel may be further purified by various means, for example, by countercurrent contact with steam as conventional in treating or deodorizing wax products.

Generally, the ethylene employed in carrying out the invention is of at least commercial purity of 95%, preferably at least 99% purity, and is desirably dry or dried by conventional means with respect to water vapor prior to introduction into the reactor. The silane comonomer feed is also preferably or equivalent purity and also dry with respect to water vapor. Under the conditions of operation of the process, ethylene can be combined with the various comonomers specified herein in all proportions preferably from 30 to 99.9%, preferably 50 to 99.5%, more preferably 80 to 99% by weight of the comonomer to produce homogeneous copolymer in efficient yields and at high conversions. Correspondingly, there is .1—60%, .5—50%, 1—20% by weight silane.

Several examples are set forth below to illustrate the nature of the invention and the manner of carrying it out. However, the invention should not be considered as being limited to the details thereof.

Examples

In the Examples that follow, ethylene and silane comonomers were copolymerized in the presence of isopropanol as a chain transfer agent and di-tert butyl peroxide as a free radical initiator. The reaction was carried out in a 4 liter high-pressure stirred reactor.

Examples 1—5

In Examples 1—5 ethylene was continuously copolymerized with vinyltriethoxysilane (VTE). The pressure in the reactor was 475 atmospheres (48.0 MPa) and the temperature was 190°C. Ethylene was continuously added to the reactor to maintain the pressure in the reactor at 475 atmospheres (48.0 MPa). The feed rate of the vinyltriethoxysilane as well as the amount of initiator added to the reactor are summarized in Table I. The di-tertbutyl peroxide was added to the reactor with the isopropanol. The amount of initiator added is indicted in Table I by mole percent based on the total amount of the reaction mixture. The polymer and ethylene are continually discharged from the reactor in the rates shown in Table I in kilograms per hour. The conversion rate by percent of ethylene and silane consumed are also included in Table I. The average residence time was 50 to 75 minutes, and the reaction product was fed to a constant level separator at 3—5 atmospheres (0.3 to 0.5 MPa) and 140°C.

Table II summarizes the characteristics of the telomer-copolymer produced. Included are the molecular weight of the precipitated polymer as determined by gel permeation chromatography (GPC), the Mettler drop point, the Brookfield Viscosity at 140°C, the hardness of the material as measured at 25°C by ASTM D-5 test method, and the percent silane in the polymer, based on precipitated polymer. The polymer was precipitated as described below.

The Mettler drop point, which characterized melting temperature, was determined with a "Mettler FP3" instrument at a 2°C/min. heating rate. The constant rate temperature increase started from 60°C after the temperature of the sampling tube, filled with polymer specimen, was equilibrated for 1 min. The drop point temperature of all samples was calculated as an average of two determinations.

The number average molecular weight was determined by high temperature size exclusion chromatography with Waters-150C ALC/GPC instrument equipped with an infrared detector, a Data Module

730 processor and a DuPont bimodal set of columns: first—PSMZORBAX-60S and second—PSMZORBAX-1000S. The analysis was done at 145°C temperature with o-dichloro-benzene as a mobile phase and 1.0 ml/min flow rate.

The product in Examples 1—5 was treated as follows with Example 1 discussed for illustrative purposes. Eleven and one-half grams of the product were easily dissolved in 110 ml of hot xylene. The solution was easily filtered through a filter paper with no unfiltered components discovered. This was an indication that there was no measurable gelling or crosslinking of the polymer product. The copolymer was precipitated from the solution into 500 ml of anhydrous methanol, filtered and dried to a constant weight in the vacuum oven at 40°C. The precipitated copolymer of Example 1 contained 0.12 weight percent of silicone which corresponded to 0.82 weight percent of silane in the copolymer. The conversion was 65% of ethylene and 58% of the vinyltriethoxysilane in the reaction. The molecular weight of the precipitated copolymer determined by gel permeation chromatography (GPC) was 2300 number average molecular weight.

The copolymer of Example 1 was also kept in a non-treated state for 5 days at 160°C in nitrogen atmosphere. After this treatment, the copolymer had a Brookfield Viscosity of 555 centipoise at 140°C. The copolymer was completely soluble in hot xylane. The solution easily filtered through filter paper with no unfiltered components discovered indicating that there was no apparent crosslinking taking place, after 5 days at 160°C. The results are summarized in Tables I—III.

The heating of the untreated copolymer for 5 days at 160°C in a nitrogen atmosphere was performed for Examples 1, 2 and 5. Table III summarizes the change in viscosity after 5 days at 160°C as well as the gel formation after the heat treatment. Although a slight increase in viscosity was measured, there was no gel fraction found in the copolymers.

Therefore, Examples 1—5 illustrate the copolymer and process to form the copolymer of the present invention varying the content of silane from 0.8% to 18.7%. There was no detectable crosslinking of the copolymer immediately after synthesis, after storing at room temperature, and even upon heating. The conversion rates in all cases were above 60% based on the ethylene and above 50% based on the silane.

Examples 6—15

Examples 6 through 15 follow the procedure used in Examples 1 through 5 with the exception that vinyltrimethoxysilane (VTM) was copolymerized instead of vinyltriethoxysilane. The feed rates, polymer discharge rates, and conversion of the monomers are summarized in Table I. The polymer characteristics are summarized in Table II. Heat treatment of the untreated polymer for 5 days at 160°C in a nitrogen atmosphere as done in Examples 1, 2 and 5 was carried out for Examples 7, 9 and 10, and the results are summarized in Table III. Here again, although a slight increase in viscosity was experienced, no gel fraction was found in the copolymers with various silane content.

Examples 16—21

The procedure of Example 1 was followed with gamma-methacryloxypropyltrimethoxysilane (GMAT) substituted for vinyltriethoxysilane. The feed, discharge rates, and conversion are summarized in Table I, and the copolymer characteristics are summarized in Table II.

TABLE I
Ethylene copolymerization with silane monomers

| | | Feed g/hr. | | Init. | Discharge, (kg/hr.) | | Conversion % | |
|---|---|---|---|---|---|---|---|---|
| Ex. | Silane | Silane | Iso-prop. | Mol.% | Polymer | Eth. | Eth. | Sil. |
| 1 | VTE | 11 | 111 | 0.008 | 0.78 | 0.41 | 65 | 58 |
| 2 | VTE | 55 | 114 | 0.007 | 0.64 | 0.32 | 65 | 67 |
| 3 | VTE | 92 | 114 | 0.005 | 0.55 | 0.32 | 61 | 54 |
| 4 | VTE | 139 | 116 | 0.005 | 0.60 | 0.32 | 62 | 51 |
| 5 | VTE | 206 | 114 | 0.006 | 0.75 | 0.36 | 63 | 68 |
| 6 | VTM | 6 | 114 | 0.004 | 0.46 | 0.32 | 59 | 80 |
| 7 | VTM | 12 | 114 | 0.004 | 0.53 | 0.32 | 62 | 77 |
| 8 | VTM | 17 | 114 | 0.004 | 0.50 | 0.32 | 60 | 72 |
| 9 | VTM | 48 | 114 | 0.005 | 0.52 | 0.32 | 60 | 72 |
| 10 | VTM | 97 | 114 | 0.006 | 0.52 | 0.32 | 58 | 78 |
| 11 | VTM | 142 | 112 | 0.007 | 0.55 | 0.32 | 56 | 98 |
| 12 | VTM | 218 | 114 | 0.012 | 0.50 | 0.32 | 54 | 58 |
| 13 | VTM | 290 | 114 | 0.013 | 0.53 | 0.32 | 55 | 50 |
| 14 | VTM | 363 | 114 | 0.016 | 0.55 | 0.32 | 55 | 46 |
| 15 | VTM | 440 | 114 | 0.020 | 0.60 | 0.32 | 52 | 58 |
| 16 | GMAT | 6 | 114 | 0.004 | 0.51 | 0.32 | 61 | 72 |
| 17 | GMAT | 13 | 112 | 0.004 | 0.56 | 0.32 | 63 | ~100 |
| 18 | GMAT | 19 | 114 | 0.004 | 0.51 | 0.32 | 61 | 84 |
| 19 | GMAT | 49 | 108 | 0.004 | 0.51 | 0.32 | 60 | 81 |
| 20 | GMAT | 131 | 114 | 0.006 | 0.64 | 0.32 | 62 | 90 |
| 21 | GMAT | 213 | 130 | 0.012 | 0.42 | 0.32 | 45 | 74 |

TABLE II

| Ex. | Silane | Si. wt.% | Sil. wt.% | Mn | Hardness @ 25°C, dmm | Brook. visc. 140°C, cps | Mettler drop point °C |
|---|---|---|---|---|---|---|---|
| 1 | VTE | 0.1 | 0.8 | 2300 | 10.8 | 540 | 95.2 |
| 2 | VTE | 0.9 | 5.8 | 2800 | 17.6 | 660 | 92.5 |
| 3 | VTE | 1.3 | 9.0 | 2800 | 12.5 | 570 | 90.2 |
| 4 | VTE | 1.7 | 11.8 | 2500 | 27.0 | 410 | 86.8 |
| 5 | VTE | 2.8 | 18.7 | 2200 | 40.0 | 330 | 78.8 |
| 6 | VTM | 0.2 | 1.0 | 2940 | 1.2 | 420 | 108.7 |
| 7 | VTM | 0.3 | 1.7 | 2720 | 3.2 | 323 | 107.4 |
| 8 | VTM | 0.5 | 2.5 | 2880 | 5.1 | 265 | 106.3 |
| 9 | VTM | 1.3 | 6.7 | 2800 | 5.6 | 270 | 101.5 |
| 10 | VTM | 2.7 | 14.5 | — | 16.0 | 250 | 93.0 |
| 11 | VTM | 4.8 | 25.4 | 3140 | 22 | 250 | 89.0 |
| 12 | VTM | 4.8 | 25.2 | 2810 | 53 | 270 | 76.0 |
| 13 | VTM | 5.2 | 27.6 | 2660 | 126 | 365 | — |
| 14 | VTM | 5.7 | 30.0 | — | — | 250 | — |
| 15 | VTM | 8.1 | 42.9 | 2380 | — | 800 | — |
| 16 | GMAT | 0.1 | 0.9 | 2880 | 0.9 | 370 | 108.2 |
| 17 | GMAT | 0.3 | 2.9 | 3050 | 2.9 | 385 | 107.4 |
| 18 | GMAT | 0.4 | 3.1 | 2950 | 4.5 | 380 | 106.8 |
| 19 | GMAT | 0.9 | 7.8 | 3030 | 5.8 | 500 | 104.0 |
| 20 | GMAT | 2.1 | 18.3 | — | 9.2 | 710 | 96.7 |
| 21 | GMAT | 4.3 | 37.7 | — | 35.0 | 600 | 85.8 |

TABLE III
Thermostability of ethylene-silane copolymers

| Ex. | Silane in copolymer wt.% | Brookfield viscosity cps @ 140°C before heat treatment | After heat treatment | Gel fraction after heat treatment |
|---|---|---|---|---|
| 1 | 0.8 | 540 | 555 | 0 |
| 2 | 5.8 | 660 | 1070 | 0 |
| 5 | 18.7 | 330 | 510 | 0 |
| 7 | 1.7 | 350 | 400 | 0 |
| 10 | 14.5 | 240 | 320 | 0 |
| 15 | 42.9 | 670 | 1360 | 0 |

Examples 22—31

The procedure of Example 1 was followed with vinyl - tris(2 - methoxyethoxysilane) substituted for vinyltriethoxysilane. The feed, discharge rate and product description are summarized in Table IV below.

TABLE IV
Ethylene copolymerization with vinyl-tris(2-methoxyethoxysilane)

| | Feed, g/hr | | | Discharge kg/h | | Product | | |
|---|---|---|---|---|---|---|---|---|
| Exp. No. | Silane | Iso-propanol | Init | Polymer | Ethylene | Hardness @ 25°C, dmm | Brook. visc. 140°C, cps | Mettler drop point °C |
| 22 | 6 | 114 | 0.20 | 0.60 | 0.36 | 0.7 | 390 | 108.4 |
| 23 | 12 | 114 | 0.20 | 0.59 | 0.41 | 1.5 | 425 | 108.2 |
| 24 | 19 | 114 | 0.21 | 0.63 | 0.36 | 2.2 | 430 | 108.2 |
| 25 | 52 | 114 | 0.21 | 0.65 | 0.36 | 4.2 | 400 | 106.1 |
| 26 | 104 | 114 | 0.21 | 0.60 | 0.36 | 8.5 | 330 | 101.8 |
| 27 | 155 | 114 | 0.25 | 0.64 | 0.36 | 14.1 | 260 | 97.1 |
| 28 | 233 | 144 | 0.25 | 0.46 | 0.36 | 23.6 | 240 | 90.6 |
| 29 | 311 | 114 | 0.70 | 0.66 | 0.36 | 50 | 195 | 80.9 |
| 30 | 406 | 112 | 0.69 | 0.64 | 0.41 | 100 | 130 | 67.3 |
| 31 | 505 | 111 | 0.69 | 0.73 | 0.41 | — | 80 | 57.7 |

Example 32

A procedure similar to that used in Examples 1 through 5 was followed in Example 32. Vinyltriethoxysilane was fed into a reactor at 150°C. The feed rate was 6 grams per hour, using 200 grams per hour of acetone as a telogen and 0.06 mol percent based on the total reaction mixture of tert-butyl peroctoate as an initiator. The polymer and ethylene were recovered at a rate of 0.25 and 0.45 kilograms per hour. The copolymer contained of 0.8 weight percent of silane and had a number average molecular weight of 2,060, a Mettler drop point of 116.6°C, a Brookfield Viscosity at 140°C of 390 centipoise and a hardness of 0.9 dmm.

**Claims**

1. A telomer-copolymer of ethylene and a silane comonomer having the formula:

$$CH_2=\underset{R^1}{\underset{|}{C}}-[\underset{O}{\underset{\|}{C}}-O-(CH_2)_m]_x-Si[O[(CH_2)_nO]_yR^2]_vR^3_{3-v}$$

wherein: x is 0 or 1; y is 0 or 1; $R^1$ is H or an aliphatic radical having from 1 to 5 carbon atoms; $R^2$ is a saturated aliphatic radical having from 1 to 10 carbon atoms or an aryl radical having no more than two aromatic rings; m is from 1 to 5; n is from 1 to 5; v is from 1 to 3; $R^3$ is H or an aliphatic radical having from 1 to 4 carbon atoms, the copolymer having a number average molecular weight of from 500 to 10,000, and containing from 0.1 to 70% by weight of the silane comonomer.

2. The telomer-copolymer as recited in claim 1 wherein there is from 0.2 to 50% by weight of the silane comonomer.

3. The telomer-copolymer as recited in claim 1 having a number average molecular weight of from 500 to 5,000.

4. The telomer-copolymer as recited in claim 1 wherein the silane comonomer is vinyltrialkoxysilane.

5. The telomer-copolymer as recited in claim 1 wherein $R^1$ is H and x is O.

6. The telomer-copolymer as recited in claim 1 wherein the silane comonomer is gamma-acryloxyalkyltrialkoxysilane.

7. A process for producing a telomer-copolymer of ethylene and a silane comonomer having the formula:

$$CH_2=\underset{R^1}{\underset{|}{C}}-[\underset{O}{\underset{\|}{C}}-O-(CH_2)_m]_x-Si[O[(CH_2)_nO]_yR^2]_vR^3_{3-v}$$

wherein: x is 0 or 1; y is 0 or 1; $R^1$ is H or an aliphatic radical having from 1 to 5 carbon atoms; $R^2$ is a saturated aliphatic radical having from 1 to 10 carbon atoms or an aryl radical having no more than two aromatic rings; m is from 1 to 5; n is from 1 to 5, v is from 1 to 3, $R^3$ is H or an aliphatic radical having from 1 to 4 carbon atoms, the copolymer having a number average molecular weight of from 500 to 10,000 and being from 0.1 to 70% by weight vinyl silane, comprising copolymerizing ethylene and vinyl silane at a temperature of from 100 to 300°C, a pressure of 100 to 700 atmospheres (10.1 to 70.7 MPa) in the presence of a copolymerization initiator and in the presence of a telomer chain transfer agent.

8. The process as recited in claim 7 wherein the reaction proceeds until at least 30 to 90 percent of each of the comonomers copolymerized.

9. The process as recited in claim 7 wherein the average reaction residence time is from 20 to 400 minutes.

10. The process as recited in claim 7 wherein the reaction temperature is from 100 to 280°C.

11. The process as recited in claim 7 wherein there is from 0.2 to 50% by weight vinyl silane in the telomer-copolymer.

12. The process as recited in claim 7 wherein there is from 0.1 to 50 times as much telogen by weight as the silane comonomer.

**Patentansprüche**

1. Telomer-Copolymer des Ethylens und eines Silan-Comonomers mit der Formel

$$CH_2=\underset{R^1}{\underset{|}{C}}-[\underset{O}{\underset{\|}{C}}-O-(CH_2)_m]_x-Si[O[(CH_2)_nO]_yR^2]_vR^3_{3-v}$$

in der x gleich 0 oder 1 und y gleich 0 oder 1 ist, $R^1$ die Bedeutung H hat oder ein aliphatisches Radikal mit 1 bis 5 Kohlenstoffatomen ist, $R^2$ ein gesättigtes aliphatisches Radikal mit 1 bis 10 Kohlenstoffatomen oder ein Arylradikal mit nicht mehr als zwei aromatischen Ringen ist, m gleich 1 bis 5 ist, n gleich 1 bis 5 ist, v gleich 1 bis 3 ist und $R^3$ die Bedeutung H hat oder ein aliphatisches Radikal mit 1 bis 4 Kohlenstoffatomen ist, wobei das Copolymer ein zahlenmäßig durchschnittliches Molekulargewicht von 500 bis 10 000 hat und des Silan-Comonomer in einem Anteil von 0,1 bis 70 Gew.% enthält.

2. Telomer-Copolymer nach Anspruch 1, dadurch gekennzeichnet, daß der Anteil des Silancomonomers 0,2 bis 50 Gew.% beträgt.

3. Telomer-Copolymer nach Anspruch 1 mit einem zahlenmäßig durchschnittlichen Molekulargewicht von 500 bis 5 000.

4. Telomer-Copolymer nach Anspruch 1, dadurch gekennzeichnet, daß das Silancomonomer Vinyltrialkoxysilan ist.

5. Telomer-Copolymer nach Anspruch 1, dadurch gekennzeichnet, daß $R^1$ die Bedeutung H hat und x gleich 0 ist.

6. Telomer-Copolymer nach Anspruch 1, dadurch gekennzeichnet, daß das Silan-Comonomer Gamma-Acryloxyalkyltrialkoxysilan ist.

7. Verfahren zum Erzeugen eines Telomer-Copolymers des Ethylens und eines Silan-Comonomers mit der Formel

$$CH_2{=}\underset{R^1}{C}{-}[\underset{O}{\overset{}{\underset{\|}{C}}}{-}O{-}(CH_2)_m]_x{-}Si[O[(CH_2)_nO]_yR^2]_vR^3_{3-v}$$

in dem Ethylen und Vinylsilan bei einer Temperatur von 100 bis 300°C und einem Druck von 10, 1 bis 70,7 MPa in Gegenwart eines Copolymerisationsinitiators und eines Telomer-Kettenübertragungsmittels copolymerisiert werden.

8. Verfahren nach Anspruch 7, dadurch gekennzeichnet, daß die Reaktion fortschreitet, bis mindestens 10 bis 90 Prozent jedes der Comonomere copolymerisiert sind.

9. Verfahren nach Anspruch 7, dadurch gekennzeichnet, daß die durchschnittliche Reaktionsverweilzeit 20 bis 400 min beträgt.

10. Verfahren nach Anspruch 7, dadurch gekennzeichnet, daß die Reaktionstemperatur 100 bis 280°C beträgt.

11. Verfahren nach Anspruch 7, dadurch gekennzeichnet, daß das Telomer-Copolymer 0,2 bis 50 Gew.% Vinylsilan enthält.

12. Verfahren nach Anspruch 7, dadurch gekennzeichnet, daß die Menge des Telogens auf Gewichtsbasis das 0,1- bis 50-fache der Menge des Silan-Comonomers beträgt.

**Revendications**

1. Un copolymère télomère d'éthylène et d'un comonomère silanique ayant la formule:

$$CH_2{=}\underset{R^1}{C}{-}[\underset{O}{\underset{\|}{C}}{-}O{-}(CH_2)_m]_x{-}Si[O[(CH_2)_nO]_yR^2]_vR^3_{3-v}$$

dans laquelle: x est 0 ou 1; y est 0 ou 1; $R^1$ est H ou un radical aliphatique que a de 1 à 5 atomes de carbone; $R^2$ est un radical aliphatique saturé qui a de 1 à 10 atomes de carbone ou un radical aryle qui n'a pas plus de deux noyaux aromatiques; m est entre 1 et 5; n est entre 1 et 5; v est entre 1 et 3; $R^3$ est H ou un radical aliphatique qui a de 1 à 4 atomes de carbone, le copolymère ayant un poids moléculaire numérique moyen de 500 à 10 000, et contenant de 0,1 à 70% en poids du comonomère silanique.

2. Le copolymère télomère selon la revendication 1 dans lequel il y a de 0,2 à 50% en poids du comonomère silanique.

3. Le copolymère télomère selon la revendication 1 qui a un poids moléculaire numérique moyen de 500 à 5 000.

4. Le copolymère télomère selon la revendication 1, dans lequel le comonomère silanique est du vinyltrialkoxysilane.

5. Le copolymère télomère selon la revendication 1, dans lequel $R^1$ est H et x est 0.

6. Le copolymère télomère selon la revendication 1, dans lequel le comonomère silanique est le gamma-acryloxyalkyltrialkoxysilane.

7. Un procédé pour produire un copolymère télomère de l'éthylène et d'un comonomère silanique, ayant la formule:

$$CH_2{=}\underset{R^1}{C}{-}[\underset{O}{\underset{\|}{}}{-}O{-}(CH_2)_m]_x{-}Si[O[(CH_2)_nO]_yR^2]_vR^3_{3-v}$$

dans laquelle: x est 0 ou 1; y est 0 ou 1; $R^1$ est H ou un radical aliphatique qui a de 1 à 5 atomes de carbone; $R^2$ est un radical aliphatique saturé qui a de 1 à 10 atomes de carbone ou un radical aryle qui n'a pas plus de deux noyaux aromatiques; m est entre 1 et 5; n est entre 1 et 5, v est entre 1 et 3, $R^3$ est H ou un radical aliphatique qui a de 1 à 4 atomes de carbone, le copolymère ayant un poids moléculaire numérique moyen de 500 à 10 000 et étant de 0,1 à 70% en poids du silane vinylique, le procédé comprenant la copolymérisation de l'éthylène et du silane vinylique à une température de 100 à 300°C, une pression de 100 à 700 atmosphères (10,1 à 70,7 MPa) en présence d'un initiateur de copolymérisation et en présence d'un agent de transfert de chaîne télomère.

8. Le procédé selon la revendication 7, dans lequel la réaction se déroule jusqu'à ce qu'au moins 30 à 90 pour cent de chacun des comonomères soient copolymérisés.

9. Le procédé selon la revendication 7, dans lequel le temps de résidence moyen dans la réaction est de 20 à 400 minutes.

10. Le procédé selon la revendication 7, dans lequel la température de réaction est de 100 à 280°C.

11. Le procédé selon la revendication 7, dans lequel il y a de 0,2 à 50% en poids de silane vinylique dans le copolymère télomère.

12. Le procédé selon la revendication 7, dans lequel il y a de 0,1 à 50 fois plus de télogène en pods que de comonomère silanique.